# EUROPÄISCHE PATENTSCHRIFT

(11) **EP 0 452 659 B1**
(45) Veröffentlichungstag und Bekanntmachung des Hinweises auf die Patenterteilung: **15.09.1993**
(21) Anmeldenummer: 91103368.6
(22) Anmeldetag: 06.03.1991
(51) Int. Cl.: A22C 25/08

(54) **Einrichtung zum Beschicken von Fischbearbeitungsmaschinen**
Feeding device for fish processing machines
Dispositif d'amenée pour machines de traitement de poissons

(30) Priorität: 06.04.1990 DE 4011177
(43) Veröffentlichungstag der Anmeldung: 23.10.1991
(73) Patentinhaber: NORDISCHER MASCHINENBAU RUD. BAADER GMBH + CO KG, 23560 Lübeck (DE)
(72) Erfinder: Dechow, Ulrich, Dipl.-Ing., W-2400 Lübeck (DE)

(56) Entgegenhaltungen:
- DE-A- 3 608 320
- DE-C- 711 685
- DE-U- 7 045 096
- DE-U- 8 129 197
- FR-A- 440 897
- FR-A- 1 191 144
- GB-A- 900 221
- US-A- 2 602 183
- US-A- 3 104 756
- US-A- 3 561 041

## Beschreibung

Die Erfindung betrifft eine Einrichtung zur getakteten Eingabe von Fischen in Fischbearbeitungsmaschinen, bestehend aus einer Eingabeeinrichtung und einem Förderer, der insbesondere mit Aufnahmemulden oder Mitnehmern bestückt ist und die Fische beispielsweise einer Köpfeinrichtung zuführt. Eine derartige Einrichtung ist aus der US-A-3 561 041 bekannt.

Zur Bearbeitung von Fischen, insbesondere von Massenfischen werden heute überwiegend Bearbeitungsmaschinen eingesetzt, die die Fische im halb- oder vollautomatischen Verfahren bearbeiten, um die unterschiedlichsten marktgängigen Konsumprodukte zu erzeugen. Dabei spielt neben dem Streben nach hoher Qualität der Produkte die Wirtschaftlichkeit des Herstellungsprozesses eine entscheidende Rolle. Das hat zu den heute üblichen hohen Durchsatzleistungen geführt, für die die Bearbeitungsmaschinen ausgelegt werden, und zu erprobten Konzepten, die eine automatische Beschickung derselben zum Ziele haben. Einer solchen Einrichtung obliegt dann auch das Ausrichten der Fische in einheitliche Lage, da die zu beschickenden Bearbeitungsmaschinen in aller Regel eine solche einheitliche Ausrichtung der Fische erfordern. Es ist einsichtig, daß die funktionelle Sicherheit eines solchen Prozesses einwandfreie Qualität der Fische voraussetzt. Eine solche liegt jedoch nur selten vor, so daß eine manuelle Beschickung nach wie vor unumgänglich ist.

Es ist daher die Aufgabe, daß die durch die hohe Durchsatzleistung der Bearbeitungsmaschine geforderte hohe Einlegeleistung von dem Bedienungspersonal unter geringst möglicher physischer Belastung erbringbar bzw. die Einlegeleistung ohne zusätzliche Belastung steigerbar ist.

Einrichtungen mit Elementen des Anmeldegegenstandes sind aus dem druckschriftlichen Stand der Technik bekannt. So ist der DE-36 08 320 A1 eine Vorrichtung zum Ausrichten und Zuführen von Fischen zu entnehmen, in der ein Drehtisch zur Anwendung kommt, an den sich in im wesentlichen tangentialer Richtung zwei oszillierende Vorschubrinnen anschließen. Die Rinnen sind eingerichtet, in diesen befindliche Fische jeweils mit dem Kopf voraus vorzuschieben. Demzufolge werden in eine der Rinnen bezüglich Kopf-Schwanz-Lage ungeordnet aufgegebene Fische je nach Kopflage in beiden Richtungen des Oszillationshubes gefördert, so daß ein Teil der Fische auf den Drehtisch gelangt und durch diesen unter Wendung um 180° in die andere Rinne überführt wird.

Aus dem DE-GM 70 45 096 ist weiter eine Vorrichtung zum taktweisen Beschicken von Fischbearbeitungsmaschinen bekannt. Dort findet ein um eine horizontale Achse umlaufendes Zellenrad mit radial offenen Taschen für die Aufnahme von Flachfischen Verwendung. Die Fische werden mit dem Schwanz voraus in die Taschen eingeführt und verlassen diese nach einem Umlauf des Zellenrades um 180° mit dem Kopf voraus.

Mit diesen bekannten Konzepten ist die gestellte Aufgabe nicht lösbar.

Diese Aufgabe wird erfindungsgemäß durch eine Einrichtung der eingangs bezeichneten Art gelöst, die dadurch gekennzeichnet ist, daß sie über dem Förderer angeordnet ist und eine Auflagefläche für die Fische umfaßt, über der ein um eine zu der Auflagefläche senkrechte Achse umlaufend antreibbarer Mitnehmer-Drehstern mit nach außen weisenden und sektorförmige Kammern zwischen sich bildenden Mitnehmern angebracht ist, und daß die Auflagefläche in einem den Förderer überdeckenden Bereich einen Ausschnitt aufweist, welcher von einer sich im wesentlichen radial erstreckenden Kante begrenzt wird.

Dabei können sich die Mitnehmer von einem zentralen, um die Achse umlaufend antreibbaren Nabenkörper erstrecken, an den sie Tangenten bilden.

Die damit erzielbaren Vorteile bestehen insbesondere darin, daß die Fische zwar auch in diese Eingabeeinrichtung nach Kopf-Schwanz sowie nach Bauch-Rückenlage ausgerichtet aufgegeben werden müssen, daß aber lediglich eine Grobpositionierung erforderlich ist, da sich die genaue, für die Bearbeitung benötigte Position automatisch einstellt, und zwar aufgrund der auf die Fische einwirkenden Verschiebekraft, die sich aufgrund der Drehung des Mitnehmer-Drehsterns in Verbindung mit der den Fisch rückhaltenden Reibung zwischen diesem und der Ablagefläche ergibt.

Eine weitere Entlastung des Bedienungspersonals liegt darin, daß das Einlegen sitzend erfolgen kann, was in bequemer Weise durch den tellerförmigen Aufbau möglich ist, da hierdurch Beinfreiheit unterhalb der Eingabeeinrichtung besteht. Auch erweist sich als vorteilhaft, daß die eingelegten Fische bis zur Übergabe gut beobachtet und erforderlichenfalls leicht korrigiert werden können. Und schließlich ergibt sich aufgrund der begrenzten Größe der Kammern eine Art Meßlatte für die zu bearbeitenden Fische, die eventuelle Übergrößen rechtzeitig auffällig machen.

Gemäß einer bautechnisch vorteilhaften Ausführung können der Nabenkörper als gerades und regelmäßiges Prisma ausgebildet und die Mitnehmer so angeordnet sein, daß sie sich jeweils in den Ebenen der Seitenflächen des prismatischen Nabenkörpers nach außen erstrecken.

Der Mitnehmer-Drehstern der erfindungsgemäßen Einrichtung kann je nach erforderlicher Zuordnung zu einer Fischbearbeitungsmaschine in beide Drehrichtungen betrieben werden, d. h. jeweils in der Weise, daß der Umlauf des Mitnehmer-Drehsterns unter Vorauslaufen der in bezug auf das Zentrum des Drehsterns nach außen weisenden Fläche des Mitnehmers oder derart, daß der Umlauf des Mitnehmer-Drehsterns unter Vorauslaufen der in bezug auf das Zentrum des Drehsterns nach innen weisenden Fläche des Mitnehmers erfolgt.

Im ersteren Falle ergibt sich dabei eine Verschiebung der Fische vom Zentrum des Drehsterns weg nach außen und im zweiten Falle eine Verschiebung der Fische zum Zentrum des Drehsterns hin nach innen.

Um den Verschiebeweg der Fische nach außen zu begrenzen, können die Kammern an ihrer Außenseite durch eine Begrenzungsschulter abgeschlossen sein, die vorzugsweise stationär angeordnet und im Bereich des Ausschnitts in der Auflagefläche unterbrochen sein kann.

Schließlich lassen sich die Fische zur Übergabe in einheitliche Lage dadurch ausrichten, daß die Mitnehmer jeweils an ihrer an dem Fisch schiebend angreifenden Fläche eine konkave Kontur aufweisen.

Die Erfindung wird nachstehend anhand eines in der Zeichnung dargestellten Ausführungsbeispieles näher erläutert. Es zeigen
- Fig. 1: die erfindungsgemäße Einrichtung in einer Anordnung über dem Förderer einer Fischbearbeitungsmaschine in axonometrischer Darstellung,
- Fig. 2: die Einrichtung nach Fig. 1 in modifizierter Anordnung in Draufsicht betrachtet.

In einem nur angedeutet dargestellten Gestell einer Köpfmaschine 1 für Fische ist ein stark vereinfacht dargestellter, auf geeignete Weise in Pfeilrichtung angetriebener Förderer 2 vorgesehen, der die zu bearbeitenden Fische mittels Mitnehmern 3, 4 und 5 an ihrem Rücken hintergreift und quer zu ihrer Längsachse vorschiebt. Der Förderer 2 ist wie üblich mit weiteren Mitnehmersätzen versehen, die der Einfachheit halber nicht weiter dargestellt sind, und die in Förderrichtung einen Abstand zueinander haben, der die Plazierung eines Fisches zwischen benachbarten Mitnehmersätzen erlaubt. Die Mitnehmer 3, 4 und 5 tauchen durch Schlitze 6 in einer Auflagefläche 7 , auf welcher die Fische während der Förderung aufliegen, und die längs des tiefer gelegenen Randes eine aufragende Anlageschulter 8 zur Abstützung der Fische an ihrer Schnauze aufweist.

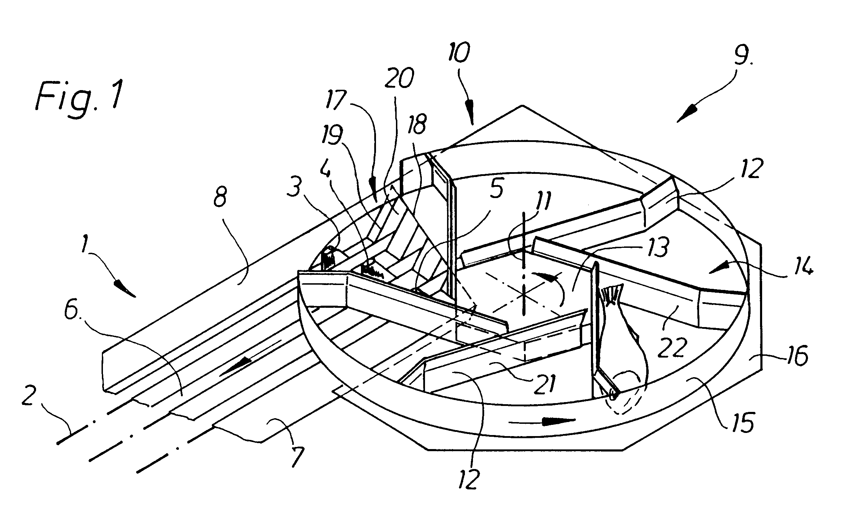

Gemäß Fig. 1 ist über dem Förderer 2 eine Eingabeeinrichtung 9 angeordnet. Sie besteht aus einem Mitnehmer-Drehstern 10 , der um eine senkrechte Achse 11 umlaufend angetrieben ist und zwar mit einer Umlaufgeschwindigkeit, die der Vorschubgeschwindigkeit des Förderers 2 im wesentlichen entspricht. Der Mitnehmer-Drehstern 10 besteht aus Mitnehmern 12 , die tangential an einem konzentrisch zu der Achse 11 angeordneten Nabenkörper 13 von der Gestalt eines geraden und regelmäßigen Prismas befestigt sind und nach außen weisen, so daß sich im wesentlichen dreieckförmige Kammern 14 zwischen je zwei benachbarten Mitnehmern 12 ergeben. Der Mitnehmer-Drehstern 10 rotiert berührungsfrei über einer Ablagefläche 16 , die in einem Bereich über dem Förderer 2 einen Ausschnitt 17 aufweist. Dieser wird von einer quer zu der Bewegungsrichtung des Förderers 2 verlaufenden Kante 18 begrenzt. Von der Kante 18 erstreckt sich eine bis auf die Auflagefläche 7 herabreichende Schürze 19 , die mit Schlitzen 20 zum Durchtritt der Mitnehmer 3, 4 und 5 versehen sind.

Die Rotation des Mitnehmer-Drehsterns 10 erfolgt ebenso berührungsfrei innerhalb einer auf der Auflagefläche 16 aufbauenden Begrenzungsschulter 15, die im Bereich des Ausschnitts 7 in der Auflagefläche 16 unterbrochen ist. Der Umlauf des Mitnehmer-Drehsterns 10 erfolgt gegen den Uhrzeigersinn und die Zuordnung der Eingabeeinrichtung 9 zu der Köpfmaschine 1 ist so getroffen, daß die Begrenzungsschulter 15 im Bereich der Kante 18 des Ausschnitts 7 in der Auflagefläche 16 mit der Anlageschulter 8 im wesentlichen fluchtet.

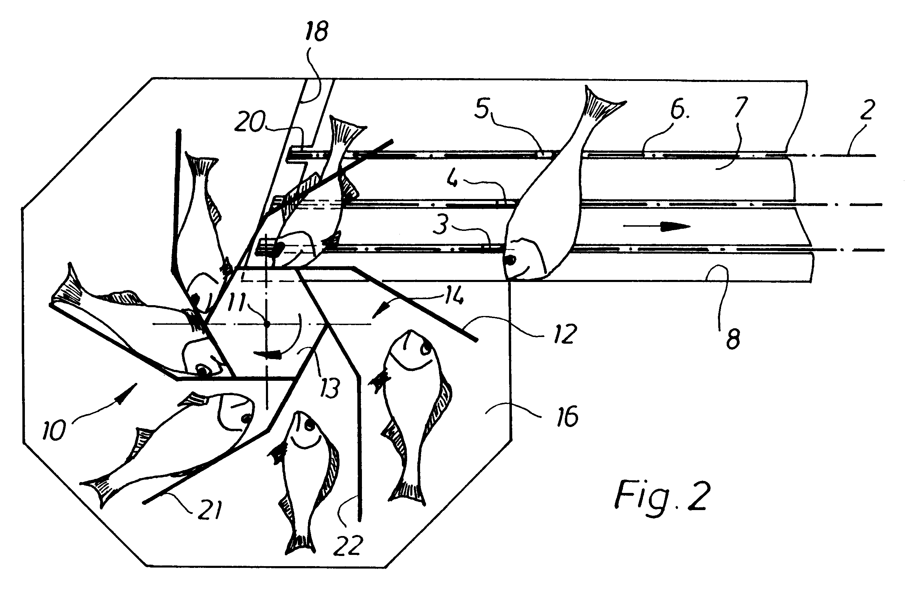

Bei der Ausführung nach Fig. 2 ist die Drehrichtung des Mitnehmer-Drehsterns 10 umgekehrt und die Zuordnung der Eingabeeinrichtung zu der Köpfmaschine 1 so getroffen, daß die Anlageschulter 8 etwa tangenial zu dem Nabenkörper 13 verläuft. Eine Begrenzungsschulter entsprechend derjenigen 15 nach Fig. 1 entfällt bei dieser Ausführung.

Die Wirkungsweise zunächst der Einrichtung nach Fig. 1 ist folgende:
Die zu bearbeitenden Fische werden mit dem Schwanz zum Drehzentrum des Mitnehmer-Drehsterns 10 je nach der Bauart der zu beschickenden Bearbeitungsmaschine mit dem Rücken oder dem Bauch zu der vorschiebenden Fläche 21 der Mitnehmer 12 in die Kammern 14 eingebracht. Das kann praktisch durch Hineinwerfen geschehen, da eine genaue Positionierung der Fische innerhalb der Kammer 14 nicht erforderlich ist. Denn die genaue Positionierung erfolgt automatisch im Verlaufe des Vorschubs der Fische zu dem Ausschnitt 17 dadurch, daß der Fisch einerseits aufgrund der Reibung zwischen diesem und der stationären Auflagefläche 16 zurückgehalten und in Verbindung mit der tangentialen Ausrichtung der Mitnehmer 12 dadurch nach außen verschoben wird. Der Fisch kommt daher bis zur Ankunft im Bereich des Ausschnitts 17 mit seiner Schnauze an der Begrenzungsschulter 15 sicher zur Anlage, so daß die Übergabe an den Förderer 2 in einheitlicher Lage seiner Schnauze erfolgt. Die Übergabe geht dann durch Abschieben über die Kante 18 vor sich, was aufgrund der gewählten Geometrie des Ausschnitts 17 so geschieht, daß der Schwanzteil des Fisches zuerst die Kante 18 passiert. Der Fisch gelangt so auf die Auflagefläche 7 des Förderers 2 der Bearbeitungsmaschine 1 und wird dort von den Mitnehmern 3, 4 und 5 hinterfaßt und zur Bearbeitung vorgeschoben.

Bei der Ausführung nach Fig. 2 werden die Fische mit der Schnauze zum Drehzentrum des Mitnehmer-Drehsterns 10 in die Kammern 14 eingebracht. Die Fische werden aufgrund des Kontaktes mit den Mitnehmern 12 zum Drehzentrum des Mitnehmer-Drehsterns 10 hin vorgeschoben und kommen schließlich mit Ihrer Schnauze in dem Winkel zwischen einer Seitenfläche des Nabenkörpers 13 und dem nachlaufenden Mitnehmer 12 zur Anlage. Dies geschieht sicher vor Erreichen der Kante 18 des Ausschnitts 17 , so daß die Übergabe der Fische an den Förderer 2 in einheitlicher lage erfolgt.

## Patentansprüche

1. Einrichtung zur getakteten Eingabe von Fischen in Fischbearbeitungsmaschinen bestehend aus einer Eingabeeinrichtung und, einem Förderer, der insbesondere mit Aufnahmemulden oder Mitnehmern bestückt ist und die Fische beispielsweise einer Köpfeinrichtung zuführt, **dadurch gekennzeichnet,** daß die Eingabeeinrichtung (9) über dem Förderer (2) angeordnet ist und eine Auflagefläche (16) für die Fische umfaßt, über der ein um eine zu der Auflagefläche (16) senkrechte Achse (11) umlaufend antreibbarer Mitnehmer-Drehstern (10) mit nach außen weisenden und sektorförmige Kammern (14) zwischen sich bildenden Mitnehmern (12) angebracht ist, daß die Auflagefläche (16) in einem den Förderer (2) überdeckenden Bereich einen Ausschnitt (17) aufweist, welcher von einer sich im wesentlichen radial erstreckenden Kante (18) begrenzt wird und daß sich die Mitnehmer (12) von einem zentralen, um die Achse (11) umlaufend antreibbaren Nabenkörper (13) erstrecken, an den sie Tangenten bilden.

2. Einrichtung nach Anspruch 1, **dadurch gekennzeichnet,** daß der Nabenkörper (13) als gerades und regelmäßiges Prisma ausgebildet ist, und daß die Mitnehmer (12) so angeordnet sind, daß sie sich jeweils in den Ebenen der Seitenflächen des prismatischen Nabenkörpers (13) nach außen erstrecken.

3. Einrichtung nach einem der Ansprüche 1 bis 2, **dadurch gekennzeichnet,** daß der Umlauf des Mitnehmer-Drehsterns (10) unter Vorauslaufen der in bezug auf das Zentrum des Drehsterns (10) nach außen weisenden Fläche (21) des Mitnehmers (12) erfolgt.

4. Einrichtung nach einem der Ansprüche 1 bis 2, **dadurch gekennzeichnet,** daß der Umlauf des Mitnehmer-Drehsterns (10) unter Vorauslaufen der in bezug auf das Zentrum des Drehsterns (10) nach innen weisenden Fläche (22) des Mitnehmers (12) erfolgt.

5. Einrichtung nach Anspruch 3, **dadurch gekennzeichnet,** daß die Kammern (14) an ihrer Außenseite durch eine Begrenzungsschulter (15) abgeschlossen sind.

6. Einrichtung nach einen der Ansprüche 1 bis 5, **dadurch gekennzeichnet,** daß die Mitnehmer (12) jeweils an ihrer an dem Fisch schiebend angreifenden Fläche (21 oder 22) eine konkave Kontur aufweisen.

7. Einrichtung nach Anspruch 6, **dadurch gekennzeichnet,** daß die Begrenzungsschulter (15) stationär angeordnet und im Bereich des Ausschnitts (17) unterbrochen ist.

## Claims

1. Equipment for cyclic feeding of fish into fish processing machines, consisting of a feeding device and a conveyor, which in particular is equipped with receiving troughs or entrainers and feeds the fish to for example a beheading device, characterised thereby that the feeding device (9) is arranged above the conveyor (2) and comprises a deposit surface (16) for the fish, above which is mounted an entraining rotary star (10), which is drivable to rotate about an axis (11) perpendicular to the deposit surface (16), with outwardly pointing and sector-shaped chambers (14) between entrainers (12) which are formed, that the deposit surface (16) has a cutout (17), which is bounded by a substantially radially extending edge (18), in a region over the conveyor (2) and that the entrainers (12) extend from a central hub body (13), which is drivable to rotate about the axis (11) and at which the entrainers form tangents.

2. Equipment according to claim 1, characterised thereby that the hub body (13) is constructed as a right and regular prism, and that the entrainers (12) are so arranged that they respectively extend outwardly in the planes of the side surfaces of the prismatic hub body (13).

3. Equipment according to one of claims 1 to 2, characterised thereby that the rotation of the entraining rotary star (10) takes place with the surface (21), which faces outwardly with respect to the centre of the rotary star (10), of the entrainer (12) running ahead.

4. Equipment according to one of claims 1 to 2, characterised thereby that the rotation of the entraining rotary star (10) takes place with the surface (22), which faces inwardly with respect to the centre of the rotary star (10), of the entrainer (12) running ahead.

5. Equipment according to claim 3, characterised thereby that the chambers (14) are closed off at their outer sides by a boundary shoulder (15).

6. Equipment according to one of claims 1 to 5, characterised thereby that the entrainers (12) each have a concave contour at their surface (21 or 22) slidingly engaging at the fish.

7. Equipment according to claim 6, characterised thereby that the boundary shoulder (15) is arranged to be stationary and is interrupted in the region of the cutout (17).

## Revendications

1. Installation d'amenée rythmée de poissons dans des dispositifs de traitement de poissons, composée d'une installation d'amenée et d'un transporteur qui est en particulier équipé d'auges réceptrices ou éléments d'entraînement et qui amène par exemple les poissons à une installation d'étêtage, **caractérisée** en ce que
l'installation d'amenée (9) est disposée au-dessus du transporteur (2) et comprend une surface d'appui (16) des poissons, au-dessus de laquelle est montée une étoile tournante (10) d'éléments d'entraînement, qui peut être entraînée en rotation autour d'un axe vertical (11) perpendiculaire à la surface d'appui (16), et qui est pourvue d'éléments d'entraînement (12) qui constituent entre eux des chambres (14) en forme de secteurs tournées vers l'extérieur, en ce que
la surface d'appui (16) présente, dans une zone recouvrant le transporteur (2) une découpe (17) qui est limitée par une arête (18) s'étendant de manière sensiblement radiale, et en ce que
les éléments d'entraînement (12) s'étendent à partir d'un corps (13) de moyeu, qui peut être entraîné à rotation autour de l'axe (11), auquel ils constituent des tangentes.

2. Installation selon la revendication 1, **caractérisée** en ce que le corps (13) de moyeu est réalisé sous forme de prisme droit et régulier et en ce que les éléments d'entraînement (12) sont disposés d'une manière telle qu'ils s'étendent respectivement vers l'extérieur dans les plans des faces latérales du corps prismatique (13) de moyeu.

3. Installation selon l'une des revendications 1 ou 2, **caractérisée** en ce que la rotation de l'étoile tournante (10) des éléments d'entraînement s'effectue d'une manière telle que la surface tournée vers l'extérieur (21), par rapport au centre de l'étoile tournante (10), de l'élément d'entraînement (12) précède l'autre surface.

4. Installation selon l'une des revendications 1 ou 2, **caractérisée** en ce que la rotation de l'étoile tournante (10) de l'entraînement s'effectue d'une manière telle que la surface tournée vers l'intérieur (22), par rapport au centre de l'étoile tournante (10), de l'élément d'entraînement (12) précède l'autre surface.

5. Installation selon la revendication 3, **caractérisée** en ce que les chambres (14) sont fermées sur leur côté extérieur par un épaulement formant limite (15).

6. Installation selon l'une des revendications 1 à 5, **caractérisée** en ce que les éléments d'entraînement (12) présentent respectivement un contour concave à leur surface (21 ou 22) agissant à coulissement sur le poisson.

7. Installation selon la revendication 6, **caractérisée** en ce que l'épaulement formant limite (15) est disposé de façon stationnaire et est interrompu dans la zone de la découpe (17).
